# DEMANDE DE BREVET EUROPEEN

(11) **EP 1 912 168 A1**
(43) Date de publication de la demande: **16.04.2008**
(21) Numéro de dépôt: 07290974.0
(22) Date de dépôt: 03.08.2007
(51) Int. Cl.: G06Q 20/00, H04Q 7/32

(54) **Terminal de paiement électronique et procédé de mise à disposition de terminaux de paiement électroniques**

(30) Priorité: 17.08.2006 FR 0607350
(71) Demandeur: Ingenico, 92200 Neuilly-sur-Seine (FR)
(72) Inventeur: Naccache, David, 75018 Paris (FR)
(74) Mandataire: Bioret, Ludovic

(57) **Abrégé**

L'invention concerne un terminal de paiement électronique, comprenant:
- des moyens de réception de données de localisation ;
- une unité centrale prévue pour mémoriser des données de localisation susceptibles d'être reçues par les moyens de réception ; et
- un programme, mémorisé dans l'unité centrale, de configuration du terminal en fonction des données de localisation susceptibles d'être mémorisées dans l'unité centrale.

L'invention concerne également un procédé de mise à disposition, puis le cas échéant de réaffectation de terminaux de paiement électronique tels que ci-dessus.

## Description

La présente invention concerne les terminaux de paiement et, en particulier, le paramétrage de tels terminaux. Elle concerne en outre un procédé de mise à disposition de terminaux de paiement électronique.

Un terminal de paiement électronique (TPE) est un appareil électronique permettant d'enregistrer une transaction de paiement sécurisée. Un TPE est typiquement un ordinateur placé chez un commerçant, qui permet des règlements par cartes bancaires (telles que les cartes à puce ou les cartes à piste magnétique). Le commerçant introduit la carte de son client dans le lecteur du terminal et entre le montant de la transaction. Le client valide son achat, par exemple en composant son code confidentiel sur le clavier de l'appareil et reçoit un ticket confirmant la transaction.

Certains TPEs sont portatifs; ils comprennent notamment un lecteur de carte à puce, des moyens d'impression de ticket, un modem, et une carte GSM. Ils sont utilisés notamment dans les taxis, les marchés, ou pour la livraison à domicile.

Ces TPEs sont souvent reliés chez les commerçants à des moyens de gestion (par exemple une caisse enregistreuse) qui permet d'assurer la gestion du point de vente. Le système TPE/moyen de gestion constitue un terminal point de vente (TPV). Certains TPEs comportent une partie portative pour la lecture des cartes à puce et l'impression des tickets. Cette partie repose sur un socle lorsqu'elle n'est pas utilisée, et communique avec ce socle par une liaison sans fil, par exemple radioélectrique, en utilisation. Le socle peut être connecté au moyen de gestion; il comprend typiquement un modem permettant d'obtenir des autorisations de prélèvement d'organismes habilités.

Un problème se pose lorsqu'il s'agît de mettre à disposition (par exemple en location) plusieurs terminaux de paiement chez des commerçants de différents pays ou régions dans lesquels les paramètres (langue, taux de TVA, etc.) utilisés par les terminaux sont différents. En effet, une configuration logicielle spécifique est nécessaire pour chaque zone géographique distincte.

L'invention a par conséquent pour but de simplifier la configuration de ces terminaux. En outre, la solution selon l'invention devrait de préférence proposer un système décourageant le vol des terminaux de paiement.

L'invention a ainsi pour objet un terminal de paiement électronique, comprenant:
- des moyens de réception de données de localisation ;
- une unité centrale prévue pour mémoriser des données de localisation susceptibles d'être reçues par les moyens de réception ; et
- un programme, mémorisé dans l'unité centrale, de configuration du terminal en fonction des données de localisation susceptibles d'être mémorisées dans l'unité centrale..

Dans des modes de réalisation préférés, l'invention comprend une ou plusieurs des caractéristiques suivantes :
- le terminal de paiement selon l'invention comprend en outre: un module de communication, de préférence GSM/GPRS, comprenant les moyens de réception, ces moyens de réception étant adapté à recevoir une carte SIM comprenant les données de localisation ;
- les moyens de réception sont des moyens de liaison radio avec un appareil externe adapté à transmettre les données de localisation ;
- l'appareil externe est un appareil de géolocalisation par satellite;
- l'appareil externe est un téléphone portable ;
- le programme est adapté à configurer le terminal en ajustant d'après les données de localisation : des paramètres téléphoniques ; au moins un taux de taxe; et un paramètre linguistique ;
- le programme est adapté à empêcher l'exécution normale du terminal en cas de non correspondance des données de localisation susceptibles d'être mémorisées dans l'unité centrale avec des données de localisation de référence ; et
- le programme est adapté à demander la saisie d'un authentifiant correspondant à des données de localisation de référence s'il détecte un changement dans les données susceptibles d'être reçues par les moyens de réception.

L'invention concerne également l'utilisation du terminal de paiement selon l'invention pour la mise en location du terminal chez un tiers.

L'invention concerne encore un procédé de mise à disposition de terminaux de paiement électronique, comprenant les étapes de:
- stockage de terminaux de paiement électronique, chacun selon l'invention;
- fourniture de ces terminaux dans des régions géographiques différentes; et
- configuration des terminaux via exécution de leur programme de configuration respectif.

En variante, ce procédé comprend en outre les étapes de:
- réaffectation d'au moins une partie des terminaux; et
- reconfiguration des terminaux de ladite partie via exécution de leur programme de configuration respectif.

D'autres caractéristiques et avantages de l'invention apparaîtront à la lecture de la description détaillée qui suit des modes de réalisation de l'invention, donnés à titre d'exemple uniquement.

L'invention propose entre autres choses un terminal de paiement électronique, comprenant un programme, mémorisé dans l'unité centrale du terminal, pour configurer le terminal en fonction de données de localisation accessibles au terminal. De la sorte, une seule configuration logicielle est nécessaire, indépendamment de la zone géographique dans laquelle le terminal doit être mis à disposition.

Le TPE selon l'invention comprend tout d'abord des moyens de réception de données de localisation. De telles données de localisation sont par exemple fournies par une carte SIM (de l'anglais Subscriber Identity Module). Les moyens de réception de données de localisation sont dans ce cas une connexion physique d'un module de communication susceptible d'accueillir une carte SIM.

Cette carte SIM est une carte à puce comprenant une mémoire et un microcontrôleur, qui permet de stocker les informations spécifiques à l'abonné d'un réseau de type GSM. La mémoire est typiquement organisée en répertoires et fichiers comprenant notamment un identifiant de l'opérateur et des données liées au réseau. Les paramètres nécessaires à la configuration du TPE peuvent par exemple être corrélés aux données géographiques contenues dans la carte SIM dans le fichier EF_{LOCI} (LOCI pour "location information"). Le format de ce fichier étant décrit dans le paragraphe 10.2.17 de la norme Digital cellular telecommunications system (Phase 2+); Spécification of the Subscriber Identity Module - Mobile Equipment (SIM - ME) interface (GSM 11.11) ICS: 33.060.50, version 5.0.0 de décembre 1995, éditée par le European Telecommunications Standards Institute.

Le TPE comprend en outre une unité centrale. L'unité centrale assure des fonctions habituelles, telles que la commande de l'exécution de programmes ou l'affectation des ressources. Elle est en outre prévue pour mémoriser les données de localisation susceptibles d'être reçues par les moyens de réception.

Le terminal comprend aussi un programme, mémorisé dans l'unité centrale, pour configurer le terminal en fonction des données de localisation. Ainsi, lors de son exécution, ce programme commande la lecture des données de localisation et configure en conséquence le terminal. En particulier, il ajuste un ou plusieurs paramètres susceptibles de varier en fonction de l'affectation géographique du TPE.

Pour se faire, le programme lit les données de localisation, susceptibles d'être mémorisées dans l'unité centrale. Il peut alors par exemple comparer ces données (ou des données obtenues à partir de ces dernières) à un ensemble de données figurant dans une table. Ayant identifié les données de localisation pertinentes dans la table, il identifie alors des paramètres mis en correspondance avec ces dernières dans la table. Ces paramètres sont ensuite utilisés pour la configuration du terminal.

De tels paramètres peuvent être des informations de langue, des jeux de caractères, des taux de taxes ou TVA applicables territorialement etc. Il est également possible qu'une fois l'information de localisation détectée, le terminal contacte (via GPRS ou par tout autre moyen) un serveur pré-désigné. Une fois la connexion établie le terminal transmet au serveur ses données de localisation géographique et le serveur transmet au terminal des paramètres propres à l'endroit où se trouve le terminal.

Un seul et même programme peut donc être prévu pour être mémorisé dans le TPE, indépendamment de l'affectation géographique ultérieure du TPE. Les terminaux peuvent donc être produits selon un même procédé de fabrication.

Ceci est avantageux à plus d'un titre. Par exemple, lorsqu'un terminal est loué puis réaffecté, la configuration logicielle du terminal n'a pas besoin d'être modifiée. De même, un terminal initialement prévu pour être affecté dans une première zone géographique peut finalement être mis à disposition dans une autre zone, sans nécessiter de modifications.

En pratique, lorsqu'un terminal est mis à disposition, un utilisateur le muni par exemple d'une carte SIM et procède à sa configuration. La carte SIM contenant les données de localisation suffisante, la configuration du terminal s'effectue selon les paramètres régionaux adéquats.

En particulier, le programme est adapté à configurer le terminal en ajustant un ou plusieurs des paramètres suivants :
- des préfixes de numéros téléphoniques ;
- un taux de taxe, par exemple la taxe sur la valeur ajoutée ; et
- un paramètre déterminant la langue qui doit être utilisée (ainsi qu'un jeu de caractères associé, le cas échéant) par le TPE pour son interface graphique.
- des applications spécifiques à la zone géographique où le terminal est utilisé, ceci permettant par exemple le déploiement d'applications seulement dans des zones où une licence d'exploitation a été concédée.

Dans un mode de réalisation, le programme est adapté à empêcher l'exécution normale du terminal en cas de non correspondance des données de localisation avec des données de localisation de référence.

Les données de localisation de référence sont par exemple mémorisées dans l'unité centrale avant affectation du terminal, en fonction de son affectation ultérieure présumée. Ces données ne sont dans ce cas pas modifiables par l'utilisateur.

En variante, ces données peuvent devoir être entrées par l'utilisateur, par exemple chaque fois qu'un changement de carte SIM est détecté ou plus généralement chaque fois qu'il est détecté un changement de données de localisation. L'utilisateur peut dans ce cas entrer un code confidentiel, tel qu'un numéro d'identification personnel ou tout autre authentifiant, qui est attribué à l'utilisateur par le vendeur ou le loueur. Entrer le numéro d'identification personnel permet au programme de comparer des données de référence correspondant à cet authentifiant avec les données de localisation courantes, par exemple celles lues sur la carte SIM.

Si les données de localisation courantes (i.e. issue de la SIM) correspondent aux données de référence, alors le terminal est normalement activé. Dans le cas contraire, le programme empêche ou bride l'exécution normale du terminal.

De la sorte, si un terminal doit être volé ou, plus généralement, obtenu de manière illicite, le nouvel "utilisateur" sera amené à changer de carte SIM. Dans ce cas, le programme détectera une incompatibilité entre les données courantes et les données de référence et bloquera le terminal. L'obtention illicite de TPE est donc découragée.

Un exemple de TPE se prêtant à l'implémentation de l'invention est maintenant décrit.

Ce TPE est doté d'un module de communication GSM/GPRS (bi-bande 900/1800 ou 900/1900 MHz). Le TPE comprend un lecteur de carte SIM à quatre emplacements (SIM format GSM WG 10 ou trois emplacements SIM + une carte marchand disponible). En cas d'incident sur le réseau GSM/GPRS, un modem optionnel peut, le cas échéant, assurer un fonctionnement continu.

Le TPE est par exemple équipé d'un processeur 32 bits prenant en charge les cryptographies usuelles (RSA, DES, triple DES...). L'architecture du processeur est de préférence choisie de sorte à permettre à plusieurs applications de fonctionner indépendamment les unes des autres (multi applicatif et multi tâches) au sein de l'appareil.

A cet égard, le programme décrit ci-dessus peut être chargé de manière indépendante des autres applications prévues dans le TPE, afin d'assurer une sécurité logique (ou étanchéité logicielle).

Une plateforme particulièrement adéquate pour mettre en oeuvre de l'invention est adaptée de la plateforme UNICAPT 32 d'Ingenico, construite autour d'un processeur 32 bits (module hardware HSC, pour "High Security Core") incluant une sécurité embarquée et un système d'exploitation multi applicatif supportant des langages de programmation avancés tels que C, C++ ou JAVA. Une telle plateforme s'intègre dans de nombreux environnements :
- Usage itinérant avec téléphonie mobile GPRS ou avec Bluetooth ;
- Environnements multi-caisses utilisant Ethernet ou Wi-Fi avec TCP/IP ;
- Commerçants à hauts volumes de vente utilisant ADSL ;
- Communication externe par USB/PCMCIA ;
- Connexion à Internet grâce à des points d'accès Wi-Fi.

Cette plateforme peut être modifiée (en particulier son programme de configuration) afin de permettre l'implémentation de caractéristiques selon l'invention, telles que décrites ci-dessus.

Par exemple, dans un mode de réalisation, les moyens de réception prévus dans le terminal sont des moyens de liaison radio (par exemple Bluetooth, infrarouge ou Wifi, connus de l'art) avec un appareil externe susceptible de transmettre les données de localisation.

L'appareil externe peut être un appareil de géolocalisation par satellite (GPS). L'appareil GPS, situé à proximité du TPE, capte les signaux émis par des satellites du système GPS et détermine, au moyen des indications de temps que ces signaux contiennent, et à l'aide de données géographiques informatisées, la latitude, la longitude et l'altitude auxquelles il se trouve à un moment précis.

Les signaux transmis par l'appareil GPS peuvent dans ce cas être reçus par les moyens de réception, puis être stockés dans l'unité centrale du terminal de paiement. Ces données sont ensuite utilisées par le programme mémorisé dans l'unité centrale du TPE lors de la configuration du terminal, comme expliqué ci-dessus.

Selon une variante, une puce GPS peut être intégrée au TPE, de sorte à le rendre plus autonome.

Il est également possible de prévoir d'autres types de géolocalisation, permettant de déterminer la position géographique du TPE, par exemple à partir des ondes radio émises par un téléphone portable.

L'appareil externe peut donc être un téléphone portable. Avantageusement, le téléphone portable peut dans ce cas être aussi utilisé comme modem, pour communiquer avec un organisme de paiement. Le programme est alors en outre adapté à contrôler les moyens de réception lors d'une communication avec le téléphone portable.

L'invention n'est cependant pas limitée aux variantes décrites ci-avant mais est susceptible de nombreuses autres variations aisément accessibles à l'homme du métier. A titre d'exemple, il est possible de prévoir des applications de l'invention à des TPEs fixes, portables et mobiles.

## Revendications

1. Terminal de paiement électronique, comprenant:
- des moyens de réception de données de localisation ;
- une unité centrale prévue pour mémoriser des données de localisation susceptibles d'être reçues par les moyens de réception ; et
- un programme, mémorisé dans l'unité centrale, de configuration du terminal en fonction des données de localisation susceptibles d'être mémorisées dans l'unité centrale.

2. Le terminal de paiement selon la revendication 1, comprenant en outre:
- un module de communication, de préférence GSM/GPRS, comprenant les moyens de réception, ces moyens de réception étant adapté à recevoir une carte SIM comprenant les données de localisation.

3. Le terminal de paiement selon la revendication 1, dans lequel les moyens de réception sont des moyens de liaison radio avec un appareil externe adapté à transmettre les données de localisation.

4. Le terminal de paiement selon la revendication 3, dans lequel l'appareil externe est un appareil de géolocalisation par satellite.

5. Le terminal de paiement selon la revendication 3, dans lequel l'appareil externe est un téléphone portable.

6. Le terminal de paiement selon l'une quelconque des revendications 1 à 5, **caractérisé en ce que** le programme est adapté à configurer le terminal en ajustant d'après les données de localisation :
- des paramètres téléphoniques ;
- au moins un taux de taxe; et
- un paramètre linguistique.

7. Le terminal de paiement selon l'une quelconque des revendications 1 à 6, **caractérisé en ce que** le programme est adapté à empêcher l'exécution normale du terminal en cas de non correspondance des données de localisation susceptibles d'être mémorisées dans l'unité centrale avec des données de localisation de référence.

8. Le terminal de paiement selon la revendication 7, **caractérisé en ce que** le programme est adapté à demander la saisie d'un authentifiant correspondant à des données de localisation de référence s'il détecte un changement dans les données susceptibles d'être reçues par les moyens de réception.

9. Utilisation du terminal de paiement selon l'une quelconque des revendications 1 à 8, pour la mise en location du terminal chez un tiers.

10. Procédé de mise à disposition de terminaux de paiement électronique, comprenant les étapes de:
- stockage de terminaux de paiement électronique, chacun selon l'une quelconque des revendications 1 à 8;
- fourniture de ces terminaux dans des régions géographiques différentes; et
- configuration des terminaux via exécution de leur programme de configuration respectif.

11. Procédé selon la revendication 10, comprenant en outre les étapes de:
- réaffectation d'au moins une partie des terminaux; et
- reconfiguration des terminaux de ladite partie via exécution de leur programme de configuration respectif.
